# EUROPEAN PATENT APPLICATION

(11) **EP 0 921 103 A1**
(43) Date of publication of application: **09.06.1999**
(21) Application number: 97309673.8
(22) Date of filing: 02.12.1997
(51) Int. Cl.: C03B 3/02, C03B 5/193, C03B 37/08

(54) **Manufacture of man-made vitreous fibres**

(71) Applicant: Rockwool International A/S, DK-2640 Hedehusene (DK)
(72) Inventor: Jensen, Leif Moller, 4000 Roskilde (DK)
(74) Representative: Lawrence, Peter Robin Broughton

(57) **Abstract**

Man-made vitreous fibres are formed from a melt which is formed in a tank furnace which has a refractory lining, and mineral waste which includes combustable material is mixed into the melt, the melt contains iron oxide, and oxygen is blown into the melt.

## Description

This invention relates to the manufacture of man-made vitreous fibres (MMVF) by processes comprising providing a mineral melt and fiberising the melt into fibres.

Several different types of furnace are known for forming and containing the mineral melt and the choice of the type of furnace is usually made having regard to the energy which is conveniently available and the composition of the melt.

When the composition is of a type such that the fibres would be regarded as rock (including stone or slag) fibres rather than glass fibres, the melt will usually contain significant amounts of iron oxide (for instance above 2%). All contents described herein are expressed in terms of the weight of the component based on the weight of the total melt or fibre, all components being expressed as oxides.

It is common to form a rock melt by heating a stack of the mineral material in a shaft furnace by combustion of fuel in the furnace, whereupon melt collects at the base of the furnace. For instance a cupola furnace may be used. The shell of the furnace is usually constructed of water-cooled steel. The cooling protects the steel shell and results in some melt solidifying on the inside of the shell to provide a freeze lining. This freeze lining provides some heat insulation. Any attempt at achieving improved insulation by applying a conventional refractory lining is not cost effective because of the cost of the lining and its short useful life in the furnace in contact with the rock melt.

When the melt composition is such that the fibres would be regarded as glass fibres rather than rock fibres, the melt usually contains little or no iron oxide (below 2%). It is common to provide glass melts by melting the mineral material in a tank furnace. The tank furnace is usually provided with a refractory lining, formed of refractory oxides. This provides insulation and is cost effective because it has an adequately long life in the furnace in contact with conventional glass melts. The tank furnace can be a gas or oil fired tank furnace, an electrode tank furnace, a molybdenum electrode tank furnace or an electric arc furnace, or any other conventional electric furnace. Submerged combustion possibly with overhead combustion is described in U.S. 4,545,800, and overhead combustion in an electric furnace is described in U.S. 5,100,453.

It is known that the redox potential of the glass melt can influence glass properties and it is described in US 4,632,687 that the melt may be reoxidised by bubbling an oxidising agent through the melt.

It is common practice to want to recycle waste MMVF product into melt which is to be fiberised, and the waste product is often contaminated with organic binder and other combustible material applied to the waste product during its initial manufacture. In US 5,100,453 the waste product is applied on to the upper surface of a glass melt and is burnt by burners before the fibres mix into the melt. It is said that at least 95% of the carbon is eliminated before the fibres mix in to the melt and preferably the unoxidised residue is less than 0.1%. Since the melt (and the waste) is described as being glass, the amount of iron oxide will be very low (below 1%).

Achieving high removal of carbon is difficult when significant amounts of waste are used unless the waste is subjected to precombustion in a preliminary furnace. However this is inconvenient as it requires the provision of an extra furnace.

When using a tank furnace which has a refractory lining, we have found that the inclusion of mineral waste material that contains combustible material (e.g., MMVF waste which contains binder) in an iron-containing mineral melt without prior removal of the binder is liable to cause serious corrosion of the lining.

It has been our object to find a convenient way of reducing this corrosion of the lining.

A process according to the invention for making MMV fibres comprises providing a mineral melt in a tank furnace which has a refractory lining and in which the melt is heated mainly by electric heating, and fiberising the melt, and in this process mineral waste material which includes combustible material is mixed into and melted in the melt, the melt contains at least 2% iron oxide, and oxygen is blown through the melt.

We find that the combination of the iron and the oxygen is able to result in a significant reduction in the corrosion of the refractory lining. We believe that the iron contributes significantly to the successful reduction in corrosion.

We find best results are achieved when the amount of oxygen which is blown through the melt is such that the formation of elemental iron in the melt is greatly reduced and, preferably, is substantially prevented. We believe that the elimination of elemental iron from the melt indicates the presence of oxidising conditions throughout the melt and, in particular, indicates that the iron is mainly present in the trivalent form or in equilibrium between the trivalent and divalent forms, in contrast to being present in equilibrium between the divalent form and free iron.

As a result of the iron oxide being present in the trivalent form, it acts as an oxidising agent uniformly distributed, on a microscale, throughout the melt and thus local reducing conditions, even on a microscale, are avoided. Thus, by blowing oxygen into the melt there is significant oxidation of the iron from ferrous to ferric and there is convection in the melt, and the combination of the ferric content and the convention (and the blown oxygen) prevents excessive reducing conditions existing adjacent to the refractory lining.

Irrespective of whether or not this is the actual mechanism which is involved in the invention, the combination of oxygen blowing and iron, and in particular the minimisation of the amount of elemental iron, does result in significant reduction in the corrosion of the refractory lining of the tank furnace.

Generally, the amount of iron oxide in the melt is at least 3 or 4% and usually at least 5% by weight of the melt. The amount of iron may be up to 15% or even higher, but these high iron contents are usually unnecessary and the amount of iron is usually not more than 12%, and preferably not more than 10% by weight of the melt.

The melt which is provided in the invention usually not only contains iron but also contains significant amounts of alkaline earth metals and low amounts of alkali metals. Typically the melt contains below 10% and usually below 6% by weight sodium and potassium, and 10 to 50%, often 15 to 40%, calcium and magnesium (as CaO and MgO). Also the melt contains silicon (eg 30 to 70% as SiO₂) aluminium (eg 0 to 35% as Al₂O₃) and other optional components.

The waste which is mixed into the melt usually contains at least 0.5% (by weight of the waste) combustible material but frequently the amount is not more than 5 or 10%. The waste material may be any material which has a significant mineral content (in order to contribute usefully to the formation of the mineral melt) but which also includes combustible material, i.e., carbonaceous or organic material. A variety of wastes can be used but the invention is of particular value when the waste is MMVF waste. Suitable MMVF wastes contain for instance 1 to 5% by weight. The combustible material generally includes organic binder, typically in an amount of 1 to 3% by weight of the waste, and may also contain other components such as water repellents or wetting agents.

The MMVF waste which is mixed into the melt may be a mixture of various types of man-made vitreous waste including shot, unbonded fibre and bonded fibre. It may be manufactured bonded web which has failed quality control and so is being recycled or it may be waste from the initial manufacture, such as waste from the pit of the collecting chamber associated with the production of MMV fibres.

The total amount of waste which is added to the melt will provide sufficient combustible material, at least some of the time, to cause unwanted reduction of the iron. Usually therefore at least 5% by weight of the melt is provided in the furnace by melting the waste into the melt. In some processes all the melt is provided by melting waste into the melt. In some cases, however, some of the melt is provided by melting a mineral charge in a preliminary furnace, feeding that premelted material into the tank furnace and melting the waste into that. For instance 5 to 50% by weight of the melt may be provided in the tank furnace by melting the waste and 50 to 95% by weight of the melt may be provided by melting a mineral charge in a preliminary furnace. If desired, other particulate mineral material can be added into and melted in the melt. For instance 0 to 90% (usually 0 - 30%) of the melt may be provided by melting such material, with the waste, into the melt. Generally at least 10% and preferably at least 20% by weight of the melt is provided in the tank furnace by melting the waste into the melt.

The waste must be entered into the melt and oxidised within it. The simplest way of achieving this is to drop the waste onto the surface of the melt and thereby melting the waste through contact with the melt. Instead of or in addition to this, deliberate agitation of the melt can be provided by mechanical stirrers. Instead of dropping the waste onto the surface of the melt, it can be extruded into the melt, for instance by a screw conveyer which ejects the material at a position beneath the surface of the melt.

The blowing of oxygen through the melt can best be achieved using one or more oxygen lances which force oxygen into the melt generally near the base of the melt in the furnace. Through the internal circulation generated by the electrodes the oxygen is homogeneously distributed in the melt. The oxygen is usually pure oxygen but any mixutre including oxygen can be used, e.g., air.

Substantially all the heating in the furnace is usually provided by electric heating. The electrodes are preferably of graphite.

A minor amount (always below 50% and generally below 25% of the total energy which has to be added in the furnace) can be provided by other sources of heating, for instance a plasma torch above the melt or submerged combustion burners as in US 4,545,800. Sufficient oxygen must be blown to ensure maintenance of the desired oxidising conditions.

The melt in the tank furnace may be provided solely by melting solid mineral material in the tank furnace, for instance waste alone or waste and other particulate mineral material. The waste is preferably MMVF waste. Preferably the melt is provided partly by melting waste (and optionally other particulate mineral material) in the tank furnace and partly by feeding melt formed in a preliminary furnace to the tank furnace. The preliminary furnace can be an electric heated furnace but is preferably a shaft furnace in which a stack of mineral material is melted and the melt is collected at the bottom and run from the shaft furnace into the tank furnace. Preferably the shaft furnace is a cupola or a gas heated shaft furnace.

The amount of oxygen that has to be blown in order to minimise the reduction of ferric or ferrous iron to elemental iron can be reduced by adding an oxidising agent to the melt, for instance with the waste. For example, the addition of ferric oxide (for instance as an ore of ferric oxide) will tend to minimise the tendency for ferrous iron to be reduced to elemental iron, and thus the addition of oxidising agent in this manner can reduce the amount of oxygen blowing that is required.

The refractory lining in the tank furnace is generally formed of any of the refractory oxide materials conventionally used as refractory linings in tank furnaces. Some or all of the refractory oxides are usually selected from Al₂O₃, SiO₂, ZrO₂ and Cr₂O₃. Blends with other oxides, such as MgO, are frequently used. Although the refractory oxide can be free of Cr₂O₃, it often contains a significant amount, for instance above 20% and up to, for instance, 95%, based on the total weight of the refractory. Suitable materials contain 30 to 60% Cr₂O₃, and spinels containing MgO are also suitable.

The MMV fibres may be made from the fibre forming mineral melt in conventional manner. Generally they are made by a centrifugal fibre forming process. For instance the fibres may be formed by a spinning cup process in which they are thrown outwardly through perforations in a spinning cup, or melt may be thrown off a rotating disc and fibre formation may be promoted by blasting jets of gas through the melt, or fibre formation may be conducted by pouring the melt onto first rotor in a cascade spinner. Preferably the melt is poured onto the first of a set of two, three or four rotors each of which rotates about a substantially horizontal axis whereby melt on the first rotor is primarily thrown onto the second rotor although some may be thrown off the first rotor as fibres, and melt on the second rotor is thrown off as fibres although some may be thrown towards the third rotor, and so forth.

The following is an example of the invention and, as a comparison, the same process but without oxygen blowing is reported.

In each process, a charge of 40% chopped mineral wool waste (containing binder) and 60% 0 to 25mm basalt is fed into a submerged electric arc furnace having a diameter of 5m and provided with three graphite electrodes. These provide a power level of 4MW. The furnace operates with a melt flow of 5t/h. The furnace is provided with a lining of Chrom Corund of 30% Cr₂O₃, 65% Al₂O₃ and 5% ZrO₂.

In normal operation (not in accordance with the invention) liquid iron has to be tapped from the furnace twice a week, at a rate of about 3t/week and the lining has to be changed every six months in order to assure safety.

In a process according to the invention, the furnace is adapted by the provision of three tubes for the injection of oxygen beneath the surface of the melt, and oxygen is injected at 15Nm³/h. Iron production terminated so that it was no longer necessary or possible to tap the iron from the melt, and this was advantageous in itself. Further, the rate of corrosion of the refractory lining is greatly reduced and it is now estimated that the lining will only have to be replaced every two years, instead of every six months.

## Claims

1. A process for making MMV fibre comprising providing a mineral melt in a tank furnace which has a refractory lining and in which the melt is heated mainly by electric heating, and fiberising the melt, characterised in that mineral waste which includes combustible material is mixed into the melt, the melt contains at least 2% by weight iron oxide, and oxygen is blown through the melt.

2. A process according to claim 1 in which the amount of oxygen is such that formation of elemental iron in the melt is substantially prevented.

3. A process according to any preceding claim in which the amount of iron oxide in the melt is 5 to 15% by weight.

4. A process according to any preceding claim in which the waste material is added on to the top of the melt and the blowing of oxygen causes mixing of the waste into the melt.

5. A process according to any preceding claim in which the waste includes at least 1% combustible material.

6. A process according to any preceding claim in which 5 to 100% of the melt is provided in the tank furnace by melting the waste into the melt.

7. A process according to any preceding claim in which 5 to 50% by weight of the melt is provided in the tank furnace by melting the waste into the melt and 50 to 95% by weight of the melt is provided by melting a mineral charge in a preliminary furnace.

8. A process according to claim 7 in which the preliminary furnace is a shaft furnace.

9. A process according to any of claims 6 to 8 in which at least 20% by weight of the melt is provided in the tank furnace by melting the waste into the melt.

10. A process according to any preceding claim in which the mineral waste is MMVF waste.
